# EUROPÄISCHE PATENTSCHRIFT

(11) **EP 4 163 314 B1**
(45) Veröffentlichungstag und Bekanntmachung des Hinweises auf die Patenterteilung: **06.12.2023**
(21) Anmeldenummer: 22199149.0
(22) Anmeldetag: 30.09.2022
(51) Int. Cl.: C08G 18/42, C07D 229/00, C07D 251/34, C08G 18/79, C08G 18/80

(54) **VERFAHREN ZUR HERSTELLUNG FESTER POLYURETHANHÄRTER**
PROCESS FOR THE PREPARATION OF SOLID POLYURETHANE HARDENERS
PROCÉDÉ DE PRÉPARATION D'AGENTS DE DURCISSEMENT SOLIDES À BASE DE POLYURÉTHANE

(30) Priorität: 05.10.2021 EP 21200910
(43) Veröffentlichungstag der Anmeldung: 12.04.2023
(73) Patentinhaber: Evonik Operations GmbH, 45128 Essen (DE)
(72) Erfinder: Spyrou, Emmanouil, 46514 Schermbeck (DE); Henschke, Andrea, 48249 Dülmen (DE); Gollan, Elke, 44653 Herne (DE); Fresmann, Nicole, 45721 Haltern am See (DE); Schüller, Jessika, 56767 Gunderath (DE)
(74) Vertreter: Evonik Patent Association

(56) Entgegenhaltungen:
- EP-A1- 0 071 898
- EP-A1- 0 165 437
- EP-A1- 0 193 828
- WO-A1-2007/100399
- DE-A1- 2 615 876
- US-A- 5 777 061
- US-A1- 2001 039 325

## Beschreibung

Die vorliegende Erfindung betrifft ein Verfahren zur Herstellung eines festen, intern und extern blockierten Polyurethanhärters auf Basis eines (cyclo)aliphatischen Polyisocyanats, der für die Härtung von Pulverlacken eingesetzt werden kann.

Feste, intern und extern blockierte Polyurethanhärter stellen wertvolle Vernetzer für thermisch vernetzbare Polyurethan(PUR)-Pulverlackzusammensetzungen dar. Zur Erzielung einer guten Außenwetterstabilität und zur Vermeidung von Verfärbungen und Zersetzungen des fertigen Pulverlacks werden aromatische Anteile in den Edukten und somit den eingesetzten Polyisocyanaten und weiteren reaktiven Bestandteilen üblicherweise vermieden. Entsprechende Polyurethanhärter liegen bevorzugt bei Standardbedingungen (STP = 0 °C und 1 bar) fest vor.

Bei der Herstellung des entsprechenden intern blockierten Polyurethanhärters werden zunächst ein oder mehrere Polyisocyanate zumindest partiell mit sich selbst reversibel (z. B. unter Bildung eines Uretdions) oder irreversibel (z. B. unter Bildung eines Isocyanurats) umgesetzt. Nachfolgend wird bei der externen Blockierung das erhaltene intern blockierte Polyisocyanat zumindest partiell reversibel oder irreversibel mit einer H-aciden Verbindung umgesetzt. Im Stand der Technik üblich sind zum Beispiel externe Blockierungen mit einer Säure, einem Alkohol, einem Amin oder einem Lactam. Mit dem nun aufgefundenen erfindungsgemäßen Verfahren können besonders gut Polyurethanhärter auf Basis eines partiell reversibel oder irreversibel mit sich selbst umgesetzten (cyclo)aliphatischen Polyisocyanats hergestellt werden, die nachfolgend mit einer H-aciden Verbindung ausgewählt aus mindestens einem Lactam und/oder mindestens einem aliphatischen Alkohol umgesetzt wurden.

EP 0 023 626 A1 offenbart ein Verfahren zur Herstellung blockierter Isophorondiisocyanataddukte, bei dem trimerisiertes Isophorondiisocyanat mit ε-Caprolactam in Substanz oder in Gegenwart eines Lösemittels umgesetzt wird.

DE 27 12 931 A1 beschreibt die Herstellung eines bevorzugt mit ε-Caprolactam blockierten, Isocyanuratgruppen enthaltenden Isophorondiisocyanats. Die Trimerisierung des Isophorondiisocyanats zum Isocyanurat kann in Substanz oder in inerten organischen Lösemitteln erfolgen. Nicht umgesetztes Isocyanat wird dabei (zusammen mit ggf. vorhandenem Lösemittel) durch Dünnschichtdestillation vom gebildeten Isocyanurat abgetrennt. Nachfolgend wird das erhaltene Isocyanurat extern blockiert. Auch diese Reaktion kann in Substanz oder in Gegenwart geeigneter inerter Lösemittel durchgeführt werden.

EP 0 639 598 A1 und EP 0 720 994 A2 offenbaren Verfahren zur Herstellung von Uretdiongruppen-haltigen Polyadditionsverbindungen, bei dem Uretdiongruppen aufweisende Polyisocyanate, ggf. weitere Diisocyanate, Diole oder Estergruppen und/oder Carbonatgruppen aufweisende Diole und ggf. weitere mit Isocyanatgruppen reaktive monofunktionelle Verbindungen umgesetzt werden. Die Reaktion kann in einem geeigneten, ggü. Isocyanatgruppen inerten Lösemittel durchgeführt werden. Als geeignete Lösemittel werden Ethylacetat, Butylacetat, Ethylenglykolmonomethyl- oder-ethyletheracetat, 1-Methoxypropyl-2-acetat, 2-Butanon, 4-Methyl-2-pentanon, Cyclohexanon, Toluol, oder deren Gemische, und Lösemittel wie Propylenglykoldiacetat, Diethylenglykoldimethylether, Diethylenglykolethyl- und -butyletheracetat, N-Methylpyrrolidon und N-Methylcaprolactam und deren Gemische genannt. Die ggf. mitverwendeten Lösemittel müssen nach erfolgter Umsetzung mit Hilfe geeigneter Methoden, z. B. durch Absaugen, Sprühtrocknung oder Schmelzextrusion in einer Ausdampfschnecke vom Verfahrensprodukt abgetrennt werden.

EP 0 669 353 A1 beschreibt ein Verfahren zur Herstellung von hydroxyl- und uretdiongruppen-haltigen Polyadditionsprodukten, bei dem Uretdion-Isophorondiisocyanat und Diol und/oder Kettenverlängerer lösemittelfrei im Intensivkneter oder in Gegenwart von Lösemitteln miteinander umgesetzt werden. Als geeignete Lösemittel werden Benzol, Toluol, andere aromatische bzw. aliphatische Kohlenwasserstoffe, Essigester, Ketone, chlorierte aromatische oder aliphatische Kohlenwasserstoffe oder andere inerte Lösemittel aufgezählt. Nach Reaktion wird das Lösemittel z. B. mit Abdampfschnecken, Filmextrudern oder Sprühtrocknern entfernt.

DE 103 47 902 A1 offenbart ein Verfahren zur Herstellung Uretdiongruppen-haltiger Polyadditionsverbindungen, bei dem eine Uretdiongruppen-haltige Polyisocyanatkomponente mit Dodecandiol-1,12 und ggf. einer weiteren Verbindung mit mindestens einer Hydroxylgruppe umgesetzt wird. Die Umsetzung kann ohne Lösemittel in einem Intensivkneter oder in einem Lösemittel erfolgen. Geeignete Lösemittel sind Benzol, Toluol, andere aromatische bzw. aliphatische Kohlenwasserstoffe, Essigester, Ketone, chlorierte aromatische oder aliphatische Kohlenwasserstoffe oder andere inerte Lösemittel. Nach Reaktion wird das Lösemittel z. B. mit Abdampfschnecken, Filmextrudern oder Sprühtrocknern entfernt.

Die lösemittelfreien Verfahren zur Herstellung von Polyurethanhärtern müssen bei vergleichsweise hohen Temperaturen durchgeführt werden, damit die eingesetzten Stoffe verarbeitet werden können. Ihnen ist gemein, dass mit ihnen nicht alle Pulverlackhärter hergestellt werden können, da die Schmelz- und Erweichungspunkte der Edukte zu hoch sind, ihre Reaktivitäten nicht genügen oder die Edukte oder der resultierende Härter thermisch instabil sind.

Auch die genannten Lösemittel einsetzenden Verfahren weisen Nachteile auf, da die vor Einsatz der hergestellten Polyurethanhärter erforderliche Abtrennung des Lösemittels im Wesentlichen destillativ erfolgt. Nachteilig an ihnen ist, dass sie Energie und Zeit verbrauchen und dies zu einer zusätzlichen thermischen Belastung führt. Weiterhin sind entsprechende Verfahren zur Entfernung von Lösemitteln aus Lösung aufwändig.

US 5,777,061 A offenbart die Blockierung eines fluorhaltigen Polyisocyanats mit Triazol. Das Produkt wird aus Ethylacetat ausgefällt. Die fluorhaltigen Polyisocyanate sind jedoch nicht kommerziell erhältlich und müssen erst aufwändig aus z. B. 1 ,6-Hexamethylendiisocyanat und einem perfluorierten Polypropylenoxid hergestellt werden. Das dort offenbarte Verfahren ist somit nachteilig, da zu aufwändig.

US 2001/0039325 A1 offenbart die Blockierung eines Hexamethylendiisocyanat-Trimers mit einer Ring-hydroxylierten aromatischen Verbindung. Das Produkt wird aus Solvesso 100 ausgefällt. Die erhaltenen blockierten Polyisocyanate sind aufgrund der durch die Absorption des Sonnenlichtes verursachten Zersetzung des hydroxyaromatischen Anteils nicht außenwetterstabil. Somit ist das dort offenbarte Verfahren ebenfalls nachteilig, da es nicht zu für alle Anwendungszwecke geeigneten Härtern führt.

EP 0 071 898 A1 offenbart u.a. die Umsetzung von 4,4'-Diphenylmethan-Uretdion-Diisocyanat mit 1,4-Butandiol. Das Produkt wird aus Toluol ausgefällt. Die Phenylringe des eingesetzten MDI-Dimers führen jedoch wegen ihrer Aromatizität zu einer schlechten UV-Stabilität. Das dort offenbarte Verfahren ist somit nachteilig, da es nicht zu für alle Anwendungszwecke geeigneten Härtern führt.

Es ist somit die Aufgabe der vorliegenden Erfindung, die genannten Nachteile zu vermeiden.

Gegenstand der vorliegenden Erfindung ist ein Verfahren zur Herstellung eines festen, intern und extern blockierten Polyurethanhärters auf Basis eines (cyclo)aliphatischen Polyisocyanats, bei dem in der Reihenfolge der Schritte a) bis d)
a) i) mindestens ein intern blockiertes (cyclo)aliphatisches Polyisocyanat und ii) mindestens ein Lactam und/oder mindestens ein aliphatischer Alkohol in einem Lösemittel unter Erzeugung eines Reaktionsgemisches gelöst werden,
b) das Reaktionsgemisch aufgeheizt und umgesetzt wird,
c) das umgesetzte Reaktionsgemisch abgekühlt wird, bis Produkt ausfällt, und
d) flüssiges Lösemittel und ggf. nicht umgesetzte gelöste Edukte und ausgefallenes Produkt mechanisch voneinander separiert wird.

Bei dem erfindungsgemäßen Verfahren zur Herstellung eines festen, intern und extern blockierten Polyurethanhärters auf Basis eines (cyclo)aliphatischen Polyisocyanats handelt es sich bevorzugt um einen Polyurethanhärter, der bei Standardbedingungen (STP = 0 °C und 1 bar) fest vorliegt. Der Begriff "Polyurethanhärter" ist für den Fachmann klar. Bevorzugt handelt es sich bei dem intern blockierten Polyisocyanat um ein Uretdion oder ein Isocyanurat.

Die Edukte werden zunächst in einem Lösemittel unter Erzeugung eines Reaktionsgemisches gelöst. Bei dem Lösemittel handelt es sich bevorzugt um ein solches, in dem der herzustellende Polyurethanhärter schlecht löslich ist. Besonders gute Ergebnisse werden erzielt, wenn das Lösemittel ausgewählt aus der Gruppe der Ether ist. In Frage kommen dabei sowohl offenkettige als auch cyclische Ether. Noch bevorzugter ist der Ether ein Dialkylether der generischen Formel (I)

CₙH₂ₙ₊₁-O-CₘH₂ₘ₊₁, (I)

wobei 1 ≤ n ≤ 10 und 1 ≤ m ≤ 10 ist. Entsprechende Dialkylether einsetzende Verfahren haben den Vorteil, dass in ihnen die Edukte gut löslich, die resultierenden Produkte aber schlecht löslich sind. Somit können nach Abtrennung mit mechanischen Trennverfahren besonders gute Ausbeuten erzielt werden. Ganz besonders bevorzugt wird der Ether ausgewählt aus der Gruppe bestehend aus Diisopropylether und Methyl-tert-Butyl-Ether (MTBE).

Bei den eingesetzten Edukten handelt es sich um mindestens ein intern blockiertes (cyclo)aliphatisches Polyisocyanat und mindestens ein Lactam und/oder mindestens einen aliphatischen Alkohol. Bevorzugt ist das intern blockierte (cyclo)aliphatische Polyisocyanat ein Uretdion oder Isocyanurat des Polyisocyanats.

(Cyclo)aliphatische Polyisocyanate im Sinne dieser Erfindung sind Polyisocyanate, die ausschließlich aliphatisch und/oder cyclisch gebundene Isocyanatgruppen aufweisen. Bevorzugte intern blockierte (cyclo)aliphatische Polyisocyanate können ausgewählt werden aus der Gruppe bestehend aus den entsprechenden intern blockierten Polyisocyanaten der aliphatischen Polyisocyanate 1,4-Tetramethylendiisocyanat, 1,6-Hexamethylendiisocyanat, 1,8-Octamethylendiisocyanat, 1,10-Decamethylendiisocyanat, 1,12-Dodecamethylendiisocyanat, 1,14-Tetradecamethylendiisocyanat, 1,5-Diisocyanatopentan, Neopentandiisocyanat, Derivate des Lysindiisocyanats, Tetramethylxylylendiisocyanat (TMXDI), 2,4,4-Trimethylhexandiisocyanat, 2,2,4-Trimethylhexandiisocyanat, Tetramethylhexandiisocyanat und der 3(4)-8(9)-Bis(isocyanatomethyl)-tricyclo-[5.2.1.02.6]-decan-Isomerengemische, und der Gruppe der cycloaliphatischen Diisocyanate 1,4-Diisocyanatocyclohexan, 1,3-Diisocyanatocyclohexan, 1,2-Diisocyanatocyclohexan, 4,4'-Di(isocyanatocyclohexyl)methan, 2,4'-Di(isocyanatocyclohexyl)methan, 3-Isocyanatmethyl-3,5,5-trimethylcyclohexylisocyanat (Isophorondiisocyanat, IPDI), 1,3-Bis(isocyanatomethyl)-cyclohexan, 1,4-Bis(isocyanatomethyl)cyclohexan, 2,4-Diisocyanato-1-methylcyclohexan und 2,6-Diisocyanato-1-methylcyclohexan.

Weiter bevorzugt wird das intern blockierte (cyclo)aliphatische Polyisocyanat ausgewählt aus den blockierten Polyisocyanaten von 1,4-Tetramethylendiisocyanat, 1,6-Hexamethylendiisocyanat, 1,8-Octamethylendiisocyanat, 1,10-Decamethylendiisocyanat, 1,12-Dodecamethylendiisocyanat, 1,14-Tetradecamethylendiisocyanat, 1,5-Diisocyanatopentan, Neopentandiisocyanat, Derivate des Lysindiisocyanats, 2,4,4-Trimethylhexandiisocyanat, 2,2,4- Trimethylhexandiisocyanat, Tetramethylhexandiisocyanat, 1,4-Diisocyanatocyclohexan, 1,3-Diisocyanatocyclohexan, 1,2-Diisocyanatocyclohexan, 4,4'-Di(isocyanatocyclohexyl)methan, 2,4'-Di(isocyanatocyclohexyl)methan, 3-Isocyanatmethyl-3,5,5-trimethylcyclohexylisocyanat (Isophorondiisocyanat, IPDI), 1,3-Bis(isocyanatomethyl)cyclohexan, 1,4-Bis(isocyanatomethyl)cyclohexan, 2,4-Diisocyanato-1-methylcyclohexan und 2,6-Diisocyanato-1-methylcyclohexan

Bevorzugt ist das eingesetzte Polyisocyanat ein intern blockiertes cycloaliphatisches Polyisocyanat. Cycloaliphatische Isocyanate weisen mindestens eine cyclisch gebundene Isocyanatgruppe auf. Weiter bevorzugte intern blockierte cycloaliphatische Polyisocyanate können aus der Gruppe bestehend aus 1,4-Diisocyanatocyclohexan, 1,3-Diisocyanatocyclohexan, 1,2-Diisocyanatocyclohexan, 4,4'-Di(isocyanatocyclohexyl)methan, 2,4'-Di(isocyanatocyclohexyl)-methan, 3-Isocyanatmethyl-3,5,5-trimethylcyclohexylisocyanat (Isophorondiisocyanat, IPDI), 1,3-Bis(isocyanatomethyl)cyclohexan, 1,4-Bis(isocyanatomethyl)cyclohexan, 2,4-Diisocyanato-1-methylcyclohexan und 2,6-Diisocyanato-1-methylcyclohexan ausgewählt werden.

Noch weiter bevorzugt ist das eingesetzte Polyisocyanat ein intern blockiertes Polyisocyanat eines Polyisocyanats mit mindestens einer cyclisch und mindestens einer nichtcyclisch aliphatisch gebundenen Isocyanatgruppe. Ein ganz besonders bevorzugtes blockiertes Polyisocyanat ist intern blockiertes Isophorondiisocyanat. Besonders bevorzugt wird Uretdion-Isophorondiisocyanat oder ein Polyisocyanat mit Isocyanuratstrukturen auf Basis von Isophorondiisocyanat eingesetzt.

Bevorzugt wird weiterhin i) ein Isocyanuratgruppen-haltiges Polyisocyanat und ein Lactam (vgl. Beispiel 1) oder ii) ein Uretdiongruppen-haltiges Polyisocyanat und ein Alkohol (vgl. Beispiel 2) eingesetzt.

Wird bei dem erfindungsgemäßen Verfahren ein Lactam eingesetzt, können prinzipiell alle im Stand der Technik bekannten Lactame eingesetzt werden. Wird bei dem erfindungsgemäßen Verfahren ein aliphatischer Alkohol eingesetzt, kann prinzipiell jeder im Stand der Technik bekannte aliphatische Alkohol eingesetzt werden.

Besonders gut ausfällbare Polyurethanhärter resultieren jedoch, wenn Lactam und/oder aliphatischer Alkohol ausgewählt werden aus der Gruppe bestehend aus ε-Caprolactam, Ethylenglykol, 1,2-Propandiol, Butylenglykol (bevorzugt 1,4-Butandiol), Pentandiol (bevorzugt 1,5-Pentandiol), Hexandiol (bevorzugt 1,6-Hexandiol), Heptandiol (bevorzugt 1,7-Heptandiol), Octandiol (bevorzugt 1,8-Octandiol), Nonandiol (bevorzugt 1,9-Nonandiol), Decandiol (bevorzugt 1,10-Decandiol), Undecandiol (bevorzugt 1,11-Undecandiol), Dodekandiol (bevorzugt 1,12-Dodekandiol), Trimethylolpropan, und den OH-terminierten Oligoestern der zuvor genannten Diole (Ethylenglykol, 1,2-Propandiol, Butylenglykol, Pentandiol, Hexandiol, Heptandiol, Octandiol, Nonandiol, Decandiol, Undecandiol, Dodekandiol) mit Dicarbonsäuren mit 4 bis 12 Kohlenstoffatomen (insbesondere Butandisäure, Maleinsäure, Fumarsäure, Pentandisäure, Hexandisäure, Heptandisäure, Octandisäure, Nonandisäure, Decandisäure, Undecandisäure und Dodecandisäure).

Schritt a) wird üblicherweise bei Temperaturen von Raumtemperatur (RT, 20 °C) bis 30 °C durchgeführt. Bevorzugt wird in Schritt a) das Lösemittel vorgelegt, dann Polyisocyanat zugegeben und nachfolgend mit Lactam und/oder Alkohol versetzt.

Weiterhin kann ein Katalysator zugesetzt werden. Prinzipiell können alle in der Polyurethanchemie üblichen Katalysatoren sind eingesetzt werden. Ein bevorzugt einsetzbarer Katalysator ist DBTL.

Üblicherweise erfolgt in Schritt a) noch keine oder nur wenig Umsetzung. Aus diesem Grund wird das erhaltene Reaktionsgemisch in Schritt b) aufgeheizt und umgesetzt. Das Aufheizen erfolgt bevorzugt auf Temperaturen von 35 bis 90 °C, weiter bevorzugt auf Temperaturen von 40 bis 75 °C. Die Umsetzung erfolgt dann bevorzugt über einen Zeitraum von einer Stunde bis zwei Tagen. Gegebenenfalls kann nach einer gewissen Zeit (üblicherweise nach ca. 4 bis 12 Stunden) das Heizen eingestellt werden und die Reaktion ohne Beheizung, z. B. durch Rühren, fortgeführt werden.

Nach Beenden der Reaktion wird das umgesetzte Reaktionsgemisch in Schritt c) abgekühlt, bis Produkt ausfällt. Bevorzugt wird dabei das umgesetzte Reaktionsgemisch auf Raumtemperatur gebracht. Prinzipiell kann es jedoch auch durch weiteres Kühlen mit Eis o.ä. auf Temperaturen unter Raumtemperatur oder durch geringeres Abkühlen auf Temperaturen etwas oberhalb von Raumtemperatur gebracht werden.

In Schritt d) wird dann flüssiges Lösemittel und ggf. nicht umgesetzte gelöste Edukte und ausgefallenes Produkt mechanisch voneinander getrennt. Damit wird der größte Teil des Lösemittels, bevorzugt mindestens 95 Gew.-%, weiter bevorzugt mindestens 98 Gew.-% des eingesetzten Lösemittels entfernt. Bevorzugte mechanische Trennverfahren sind Dekantieren, Filtration (inklusive Abnutschen) und Zentrifugieren. Bevorzugt werden somit flüssiges Lösemittel und ggf. nicht umgesetzte gelöste Edukte und ausgefallenes Produkt voneinander mittels Dekantieren, Filtration oder Zentrifugieren separiert. Das erhaltene Produkt kann nachfolgend mit den üblichen Verfahren (Tempern bei erhöhter Temperatur, bevorzugt bei 60 - 130 °C, weiter bevorzugt bei 90 - 110 °C) vom restlichen Lösemittel befreit werden.

Das erfindungsgemäße Verfahren kann weiterhin bevorzugt noch bis zu zwei weitere Schritte e) und/oder f) aufweisen, in denen e) das ausgefallene Produkt von anhaftendem Lösemittel befreit wird und/oder f) das flüssige Lösemittel und ggf. nicht umgesetzte gelöste Edukte recycliert werden.

### Beispiele:

### Beispiel 1:

Ausfällen eines Isocyanurat-haltigen Polyurethanhärters aus Diisopropylether

170,5 g Vestanat T 1890 (Evonik Industries AG) werden bei 24 °C in 1000 g Diisopropylether gelöst (Dauer ca. 30 min.). Es resultiert eine klare Lösung. Zu der Lösung werden ebenfalls bei 24 °C 79,5 g ε-Caprolactam gegeben (Dauer ca. 30 min.). Bei 24 °C ist keine exotherme Reaktion erkennbar. Es wird auf 70 °C erwärmt.
a) Nach ca. 1,5 h bei 70 °C resultiert eine Trübung.
b) Nach ca. 5 h bei 70 °C und 16 h RT (über Nacht ohne Rührung) resultiert ein hochviskoser Bodensatz.
c) Nach ca. 10 h bei 70 °C und 32 h RT ist ein Feststoff ausgefallen.

Von dem gemäß Variante c) erhaltenen Feststoff wird zur Aufarbeitung das Lösemittel abdekantiert. Zur vollständigen Entfernung des Lösemittels wird das Produkt ca. 5 Stunden bei 100 °C getempert.

| | |
|---|---|
| Ausbeute: | ca. 80 % |
| Analytik: | NCO frei: < 0,5 % |
| | GC (Lm): 0,7 % |

### Beispiel 2:

Ausfällen eines Uretdion-haltigen Polyurethanhärters aus MTBE

144,4 g Vestanat BF 3780 (Evonik Industries AG, NCO frei 17,5 %) werden bei 30 °C in 578 g MTBE innerhalb ca. 1 Stunde gelöst. Es resultiert eine klare Lösung. Dann werden 0,02 g DBTL zugegeben. Anschließend wird innerhalb von 45 Minuten eine Lösung bestehend aus 55,6 g eines Oligoesters (hergestellt aus Pentandiol und Adipinsäure (2 : 1) durch Polykondensation bei 180 °C und Abtrennung des entstehenden Wassers über eine Destillation; OH-Zahl 709) in 222 g MTBE zugetropft. Bei 30 °C ist keine exotherme Reaktion erkennbar. Es wird auf 45 °C erwärmt.
a) Nach 1 h bei 45 °C ist eine leichte Trübung erkennbar.
b) Nach ca. 3 h bei 45 °C und 16 h RT (über Nacht) resultiert ohne Rühren eine Phasenbildung.
c) Nach ca. 5 h bei 45 °C und 16 h RT ist eine starke Trübung zur beobachten (NCO frei: 0,12 % (0,6 % 100 %ig)
d) Nach ca. 8 h bei 45 °C und RT (über Nacht) ohne Rühren resultiert eine Phasenbildung: beide Phasen trüb, untere Phase (Produkt) viskos

Von dem gemäß Variante d) erhaltenen viskosen Produkt wird zur Aufarbeitung die obere Lösemittelphase abdekantiert. Anschließend wird die Produktphase zur vollständigen Entfernung des Lösemittels ca. 3 Stunden bei 100 °C getempert.

| | | | |
|---|---|---|---|
| Ausbeute: | ca. 80 % | | |
| Analytik: | NCO frei: | th. 0 % | pr. 0 % |
| | NCO gesamt: | th. 12,3 % | pr. 12,1 % |
| | GC (Lm): | < 0,3 % | |

## Patentansprüche

1. Verfahren zur Herstellung eines festen, intern und extern blockierten Polyurethanhärters auf Basis eines (cyclo)aliphatischen Polyisocyanats, bei dem in der Reihenfolge der Schritte a) bis d)
a)
i) mindestens ein intern blockiertes (cyclo)aliphatisches Polyisocyanat und
ii) mindestens ein Lactam und/oder mindestens ein aliphatischer Alkohol in einem Lösemittel unter Erzeugung eines Reaktionsgemisches gelöst werden,
b) das Reaktionsgemisch aufgeheizt und umgesetzt wird,
c) das umgesetzte Reaktionsgemisch abgekühlt wird, bis Produkt ausfällt, und
d) flüssiges Lösemittel und ggf. nicht umgesetzte gelöste Edukte und ausgefallenes Produkt mechanisch voneinander separiert wird.

2. Verfahren nach Anspruch 1,
**dadurch gekennzeichnet, dass**
das Lösemittel ausgewählt aus der Gruppe der Ether ist.

3. Verfahren nach Anspruch 2,
**dadurch gekennzeichnet, dass**
der Ether ein Dialkylether der generischen Formel (I)
CₙH₂ₙ₊₁-O-CₘH₂ₘ₊₁, (I)
mit 1 ≤ n ≤ 10 und 1 ≤ m ≤ 10 ist.

4. Verfahren nach Anspruch 3
**dadurch gekennzeichnet, dass**
der Ether ausgewählt ist aus der Gruppe bestehend aus Diisopropylether und Methyl-tert-Butyl-Ether.

5. Verfahren nach einem der vorhergehenden Ansprüche,
**dadurch gekennzeichnet, dass**
das intern blockierte (cyclo)aliphatische Polyisocyanat ein Uretdion oder Isocyanurat ist.

6. Verfahren nach einem der vorhergehenden Ansprüche,
**dadurch gekennzeichnet, dass**
das intern blockierte (cyclo)aliphatische Polyisocyanat ausgewählt wird aus der Gruppe bestehend aus den intern blockierten Polyisocyanaten von 1,4-Tetramethylendiisocyanat, 1,6-Hexamethylendiisocyanat, 1,8-Octamethylendiisocyanat, 1,10-Decamethylendiisocyanat, 1,12-Dodecamethylendiisocyanat, 1,14-Tetradecamethylendiisocyanat, 1,5-Diisocyanatopentan, Neopentandiisocyanat, Derivate des Lysindiisocyanats, Tetramethylxylylendiisocyanat (TMXDI), 2,4,4-Trimethylhexandiisocyanat, 2,2,4-Trimethylhexandiisocyanat, Tetramethylhexandiisocyanat, der 3(4)-8(9)-Bis(isocyanatomethyl)-tricyclo-[5.2.1.02.6]-decan-Isomerengemische, 1,4- Diisocyanatocyclohexan, 1,3- Diisocyanatocyclohexan, 1,2-Diisocyanatocyclohexan, 4,4'-Di(isocyanatocyclohexyl) methan, 2,4'-Di(isocyanatocyclohexyl)methan, 3-Isocyanatmethyl-3,5,5-trimethylcyclohexylisocyanat (Isophorondiisocyanat, IPDI), 1,3-Bis(isocyanatomethyl)-cyclohexan, 1,4-Bis(isocyanatomethyl)cyclohexan, 2,4-Diisocyanato-1-methylcyclohexan und 2,6-Diisocyanato-1-methylcyclohexan.

7. Verfahren nach einem der vorhergehenden Ansprüche,
**dadurch gekennzeichnet, dass**
das intern blockierte (cyclo)aliphatische Polyisocyanat ein intern blockiertes cycloaliphatisches Polyisocyanat ist.

8. Verfahren nach Anspruch 7,
**dadurch gekennzeichnet, dass**
das eingesetzte Polyisocyanat ein intern blockiertes Polyisocyanat eines Polyisocyanats mit mindestens einer cyclisch und mindestens einer nichtcyclisch aliphatisch gebundenen Isocyanatgruppe ist.

9. Verfahren nach Anspruch 8,
**dadurch gekennzeichnet, dass**
das eingesetzte Polyisocyanat ein intern blockiertes Polyisocyanat von Isophorondiisocyanat ist.

10. Verfahren nach einem der vorhergehenden Ansprüche,
**dadurch gekennzeichnet, dass** die Edukte
i) ein Isocyanuratgruppen-haltiges Polyisocyanat und ein Lactam oder
ii) ein Uretdiongruppen-haltiges Polyisocyanat und ein Alkohol sind.

11. Verfahren nach einem der vorhergehenden Ansprüche,
**dadurch gekennzeichnet, dass**
das Lactam und/oder der Alkohol ausgewählt wird aus der Gruppe bestehend aus ε-Caprolactam, Ethylenglykol, 1,2-Propandiol, Butylenglykol, Pentandiol, Hexandiol, Heptandiol, Octandiol, Nonandiol, Decandiol, Undecandiol, Dodekandiol, Trimethylolpropan, sowie den OH-terminierten Oligoestern der zuvor genannten Diole mit Dicarbonsäuren mit 4 bis 12 Kohlenstoffatomen.

12. Verfahren nach einem der vorhergehenden Ansprüche,
**dadurch gekennzeichnet, dass**
das Reaktionsgemisch in Schritt b) nach dem Aufheizen eine Temperatur von 35 bis 90 °C aufweist.

13. Verfahren nach einem der vorhergehenden Ansprüche,
**dadurch gekennzeichnet, dass**
die Umsetzung in Schritt b) über einen Zeitraum von einer Stunde bis zwei Tagen erfolgt.

14. Verfahren nach einem der vorhergehenden Ansprüche,
**dadurch gekennzeichnet, dass**
in Schritt d) flüssiges Lösemittel und ggf. nicht umgesetzte gelöste Edukte und ausgefallenes Produkt voneinander mittels Dekantieren, Filtration oder Zentrifugieren separiert werden.

15. Verfahren nach einem der vorhergehenden Ansprüche,
**dadurch gekennzeichnet, dass**
in bis zu zwei weiteren Schritten e) und/oder f)
e) das ausgefallene Produkt von anhaftendem Lösemittel befreit wird und/oder
f) das flüssige Lösemittel und ggf. nicht umgesetzte gelöste Edukte recycliert werden.

## Claims

1. Process for producing a solid, internally and externally blocked polyurethane curing agent based on a (cyclo)aliphatic polyisocyanate, in which, in the sequence of steps a) to d),
a)
i) at least one internally blocked (cyclo)aliphatic polyisocyanate and
ii) at least one lactam and/or at least one aliphatic alcohol are dissolved in a solvent to produce a reaction mixture,
b)the reaction mixture is heated and reacted,
c)the reacted reaction mixture is cooled until product precipitates, and
d) liquid solvent and any unreacted dissolved reactants and precipitated product are mechanically separated from one another.

2. Process according to Claim 1,
**characterized in that**
the solvent is selected from the group of the ethers.

3. Process according to Claim 2,
**characterized in that**
the ether is a dialkyl ether of the generic formula (I)
CₙH₂ₙ₊₁-O-CₘH₂ₘ₊₁, (I)
where 1 ≤ n ≤ 10 and 1 ≤ m ≤ 10.

4. Process according to Claim 3,
**characterized in that**
the ether is selected from the group consisting of diisopropyl ether and methyl tert-butyl ether.

5. Process according to any of the preceding claims,
**characterized in that**
the internally blocked (cyclo)aliphatic polyisocyanate is a uretdione or isocyanurate.

6. Process according to any of the preceding claims,
**characterized in that**
the internally blocked (cyclo)aliphatic polyisocyanate is selected from the group consisting of the following internally blocked polyisocyanates: tetramethylene 1,4-diisocyanate, hexamethylene 1,6-diisocyanate, octamethylene 1,8-diisocyanate, decamethylene 1,10-diisocyanate, dodecamethylene 1,12-diisocyanate, tetradecamethylene 1,14-diisocyanate, 1,5-diisocyanatopentane, neopentane diisocyanate, derivatives of lysine diisocyanate, tetramethylxylylene diisocyanate (TMXDI), 2,4,4-trimethylhexane diisocyanate, 2,2,4-trimethylhexane diisocyanate, tetramethylhexane diisocyanate, the 3 (4), 8(9)-bis(isocyanatomethyl)tricyclo[5.2.1.0^{2,6}]decane isomer mixtures, 1,4-diisocyanatocyclohexane, 1,3-diisocyanatocyclohexane, 1,2-diisocyanatocyclohexane, 4,4'-di(isocyanatocyclohexyl)methane, 2,4'-di(isocyanatocyclohexyl)methane, 3-isocyanatomethyl-3,5,5-trimethylcyclohexyl isocyanate (isophorone diisocyanate, IPDI), 1,3-bis(isocyanatomethyl)cyclohexane, 1,4-bis(isocyanatomethyl)cyclohexane, 2,4-diisocyanato-1-methylcyclohexane and 2,6-diisocyanato-1-methylcyclohexane.

7. Process according to any of the preceding claims,
**characterized in that**
the internally blocked (cyclo)aliphatic polyisocyanate is an internally blocked cycloaliphatic polyisocyanate.

8. Process according to Claim 7,
**characterized in that**
the polyisocyanate used is an internally blocked polyisocyanate of a polyisocyanate having at least one cyclically and at least one acyclically aliphatically bonded isocyanate group.

9. Process according to Claim 8,
**characterized in that**
the polyisocyanate used is an internally blocked polyisocyanate of isophorone diisocyanate.

10. Process according to any of the preceding claims,
**characterized in that** the reactants are
i)an isocyanurate group-containing polyisocyanate and a lactam or
ii) a uretdione group-containing polyisocyanate and an alcohol.

11. Process according to any of the preceding claims,
**characterized in that**
the lactam and/or the alcohol is selected from the group consisting of ε-caprolactam, ethylene glycol, propane-1,2-diol, butylene glycol, pentanediol, hexanediol, heptanediol, octanediol, nonanediol, decanediol, undecanediol, dodecanediol, trimethylolpropane, and the OH-terminated oligoesters of the aforementioned diols with dicarboxylic acids having 4 to 12 carbon atoms.

12. Process according to any of the preceding claims,
**characterized in that**
in step b) after the heating the reaction mixture has a temperature of 35 to 90°C.

13. Process according to any of the preceding claims,
**characterized in that**
the reaction in step b) is effected over a period of one hour to two days.

14. Process according to any of the preceding claims,
**characterized in that**
in step d) liquid solvent and any unreacted dissolved reactants and precipitated product are separated from one another by means of decantation, filtration or centrifugation.

15. Process according to any of the preceding claims,
**characterized in that**
in up to two further steps e) and/or f)
e) the precipitated product is freed of adhering solvent and/or
f) the liquid solvent and any unreacted dissolved reactants are recycled.

## Revendications

1. Procédé pour la préparation d'un durcisseur pour polyuréthane, solide, à blocage interne et externe, à base d'un polyisocyanate (cyclo)aliphatique, dans lequel dans la succession des étapes a) à d)
a)
i) au moins un polyisocyanate (cyclo)aliphatique à blocage interne et
ii) au moins un lactame et/ou au moins un alcool aliphatique sont dissous dans un solvant, avec formation d'un mélange réactionnel,
b) le mélange réactionnel est chauffé et mis à réagir,
c) le mélange réactionnel ayant réagi est refroidi, jusqu'à ce que le produit précipite, et
d) le solvant liquide et éventuellement des produits de départ dissous n'ayant pas réagi et le produit précipité sont séparés mécaniquement les uns des autres.

2. Procédé selon la revendication 1,
**caractérisé en ce que**
le solvant est choisi dans le groupe des éthers.

3. Procédé selon la revendication 2,
**caractérisé en ce que**
l'éther est un éther de dialkyle de formule générique (I)
CₙH₂ₙ₊₁-O-CₘH₂ₘ₊₁ (I)
où 1 ≤ n ≤ 10 et 1 ≤ m ≤ 10.

4. Procédé selon la revendication 3,
**caractérisé en ce que**
l'éther est choisi dans le groupe constitué par l'éther diisopropylique et l'oxyde de méthyle et de tert-butyle.

5. Procédé selon l'une quelconque des revendications précédentes,
**caractérisé en ce que**
le polyisocyanate (cyclo)aliphatique à blocage interne est une urétdione ou un isocyanurate.

6. Procédé selon l'une quelconque des revendications précédentes,
**caractérisé en ce que**
le polyisocyanate (cyclo)aliphatique à blocage interne est choisi dans le groupe constitué par les polyisocyanates à blocage interne de 1,4-diisocyanate de tétraméthylène, 1,6-diisocyanate d'hexaméthylène, 1,8-diisocyanate d'octaméthylène, 1,10-diisocyanate de décaméthylène, 1,12-diisocyanate de dodécaméthylène, 1,14-diisocyanate de tétradécaméthylène, 1,5-diisocyanatopentane, diisocyanate de néopentane, dérivés du diisocyanate de lysine, diisocyanate de tétraméthylxylylène (TMXDI), diisocyanate de 2,4,4-triméthylhexane, diisocyanate de 2,2,4-triméthylhexane, diisocyanate de tétraméthylhexane, des mélanges d'isomères 3(4)-8(9)-bis(isocyanatométhyl)-tricyclo-[5.2.1.02.6]-décane, 1,4-diisocyanatocyclohexane, 1,3-diisocyanatocyclohexane, 1,2-diisocyanatocyclohexane, 4,4'-di(isocyanatocyclohexyl)méthane, 2,4'-di(isocyanatocyclohexyl)méthane, isocyanate de 3-isocyanatométhyl-3,5,5-triméthylcyclohexyle (diisocyanate d'isophorone, IPDI), 1,3-bis(isocyanatométhyl)cyclohexane, 1,4-bis(isocyanato-méthyl)cyclohexane, 2,4-diisocyanato-1-méthyl-cyclohexane et 2,6-diisocyanato-1-méthylcyclohexane.

7. Procédé selon l'une quelconque des revendications précédentes,
**caractérisé en ce que**
le polyisocyanate (cyclo)aliphatique à blocage interne est un polyisocyanate cycloaliphatique à blocage interne.

8. Procédé selon la revendication 7,
**caractérisé en ce que**
le polyisocyanate utilisé est un polyisocyanate à blocage interne d'un polyisocyanate comportant au moins un groupe isocyanate lié à un radical aliphatique cyclique et au moins un groupe isocyanate lié à un radical aliphatique non cyclique.

9. Procédé selon la revendication 8,
**caractérisé en ce que**
le polyisocyanate utilisé est un polyisocyanate à blocage interne de diisocyanate d'isophorone.

10. Procédé selon l'une quelconque des revendications précédentes,
**caractérisé en ce que** les produits de départ sont
i) un polyisocyanate contenant des groupes isocyanurate et un lactame ou
ii) un polyisocyanate contenant des groupes urétdione et un alcool.

11. Procédé selon l'une quelconque des revendications précédentes,
**caractérisé en ce que**
le lactame et/ou l'alcool est/sont choisi(s) dans le groupe constitué par l'ε-caprolactame, l'éthylèneglycol, le 1,2-propanediol, le butylèneglycol, le pentanediol, l'hexanediol, l'heptanediol, l'octanediol, le nonanediol, le décanediol, l'undécanediol, le dodécanediol, le triméthylolpropane, ainsi les oligoesters à terminaison OH des diols mentionnés précédemment avec des acides dicarboxyliques ayant de 4 à 12 atomes de carbone.

12. Procédé selon l'une quelconque des revendications précédentes,
**caractérisé en ce que**
le mélange réactionnel dans l'étape b) présente après le chauffage une température de 35 à 90 °C.

13. Procédé selon l'une quelconque des revendications précédentes,
**caractérisé en ce que**
la réaction dans l'étape b) s'effectue pendant une durée d'une heure à deux jours.

14. Procédé selon l'une quelconque des revendications précédentes,
**caractérisé en ce que**
dans l'étape d) le solvant liquide et éventuellement des produits de départ dissous n'ayant pas réagi et le produit précipité sont séparés mécaniquement les uns des autres par décantation, filtration ou centrifugation.

15. Procédé selon l'une quelconque des revendications précédentes,
**caractérisé en ce que**
dans jusqu'à deux étapes e) et/ou f) supplémentaires
e) le produit précipité est libéré du solvant adhérant et/ou
f) le solvant liquide et éventuellement des produits de départ dissous n'ayant pas réagi sont recyclés.
